# EUROPEAN PATENT APPLICATION

(11) **EP 1 880 752 A1**
(43) Date of publication of application: **23.01.2008**
(21) Application number: 07111592.7
(22) Date of filing: 03.07.2007
(51) Int. Cl.: B01D 46/24, B01D 46/26, B01D 46/00, F02M 35/02

(54) **Air filter with rotating filter element for an agricultural work vehicle**

(30) Priority: 20.07.2006 US 489799
(71) Applicant: Deere & Company, Moline, IL 61265-8098 (US)
(72) Inventor: Sheidler, Alan D, Moline, 61265 (US); Silver, Dennis Philip, Geneseo, IL 61254 (US)
(74) Representative: Holst, Sönke

(57) **Abstract**

An air filter (38) for an internal combustion engine (28) comprises a generally tubular filter element (66);an inlet (60) positioned outside said tubular filter element (66); an aspiration port (64) positioned outside said tubular filter element (66), said aspiration port (64) leading to an ambient environment; and an outlet (62) in communication with an inside of said tubular filter element (66).

It is proposed that the inlet (60) is near a top of said air filter (38), that the filter element (66) is rotating, and that the aspiration port (64) is positioned near a bottom of said air filter (38).

## Description

The present invention relates to agricultural working vehicles, and, more particularly, to air intake systems for internal combustion engines in such vehicles.

Work vehicles such as off road construction and agricultural vehicles are usually powered by combustion engines and operate in dirty environments. Often, an engine compartment is used to isolate the engine and cooling system from the dirty ambient air, which contains dust and other particulate matter. A work vehicle such as an agricultural harvester (e.g., combine) is also exposed to chaff (crop residue) from the crop being harvested. The crop harvesting process creates dust, dirt, and chaff that surround the vehicle. Hot engine exhaust is also discharged from the vehicle.

During operation, clean air is needed for efficient combustion in the internal combustion (IC) engine and cool air is needed for efficient engine and vehicle cooling system operation. More particularly, the air supply must be free of debris and dust so as to mix with the fuel to provide combustion in the IC engine. The combustion air intake usually includes an air pre-filter and a separate air cleaner. Further, the air supply must be free of debris and dust for use as cooling air to cool the combustion engine, hydraulic system and cab air conditioning system of the work vehicle.

The air management system on some current combines involves drawing air through a louvered side panel into the cooling package. A rotating rotary screen with a vacuum cleaning system is used to pre-clean the dirty air before it passes through the heat exchangers of the cooling package (see for example EP 1 134 379 A). A combustion air inlet is located downstream of the rotary filter and has a separate pre-cleaner (see EP 1 500 423 A) and air filter for the combustion air supplied to the engine.

However, prolonged use during harvesting operations can result in plugging of the rotary screen, plugging of the cooling package cores, plugging of the pre-cleaner, short air filter life, and excess debris accumulation on the engine deck. These affects of dirty air often require the operator to stop the vehicle and clean the air management system. Structural changes to the vehicle have reduced debris accumulation on the engine deck. However, dirty air for engine cooling and combustion air continues to be a problem.

What is needed in the art is a combustion air cooling system which inhibits particulate laden air from clogging the air filter while providing an adequate flow of the combustion air to the intake manifold(s).

This object is achieved by the subject matter of claim 1. Advantageous embodiments are recited in the dependent claims.

The present invention provides an air filter with a rotating filter element which prevents a build-up of particulate matter and cleans the filter element using centrifugal force. The air filter includes a generally tubular rotating filter element. An inlet is positioned outside the tubular filter element near a top of the air filter. An aspiration port is positioned outside the tubular filter element near a bottom of the air filter, and leads to an ambient environment. An outlet is in communication with an inside of the tubular filter element. The filter element comprises a porous material, preferably arranged in pleats, which is porous per se (for example paper) or an impermeable material provided with pores like bores, such that air can penetrate it, but dust is filtered out.

The air filter according to the invention can be used on a work vehicle including a vehicle body; and an internal combustion engine carried by the vehicle body. The internal combustion engine includes a plurality of combustion cylinders and the air filter in communication with a set of the combustion cylinders.

An embodiment of the invention is shown in the drawings, in which:
Fig. 1 is a perspective view of an agricultural combine including an embodiment of an internal combustion engine assembly of the present invention;
Fig. 2 is a side, schematic view of the internal combustion engine assembly used in the combine of Fig. 1;
Fig. 3 is an end view of an embodiment of an air filter of the present invention, used with the internal combustion engine of Figs. 1 and 2; and
Fig. 4 is a side, sectional view of the air filter shown in Fig. 3.

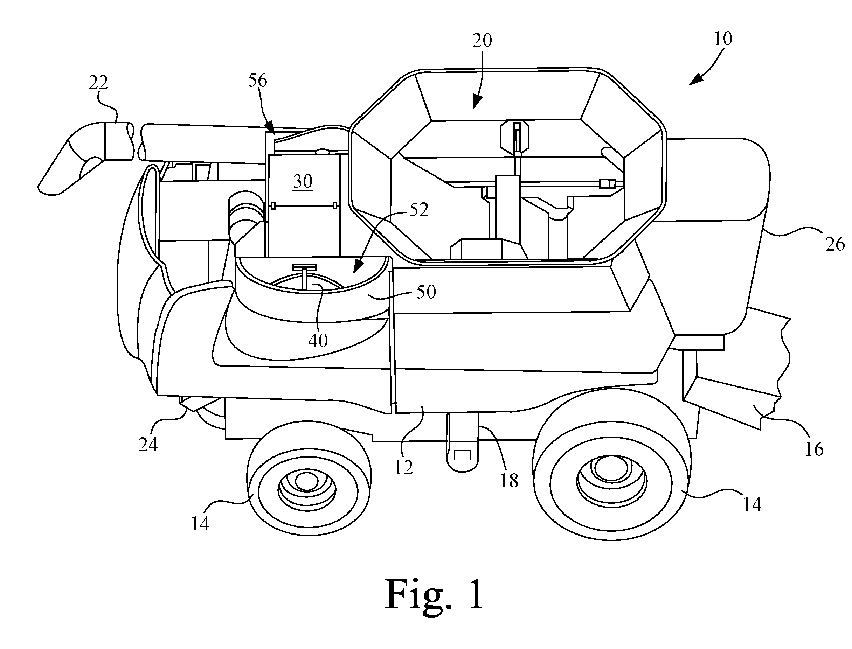

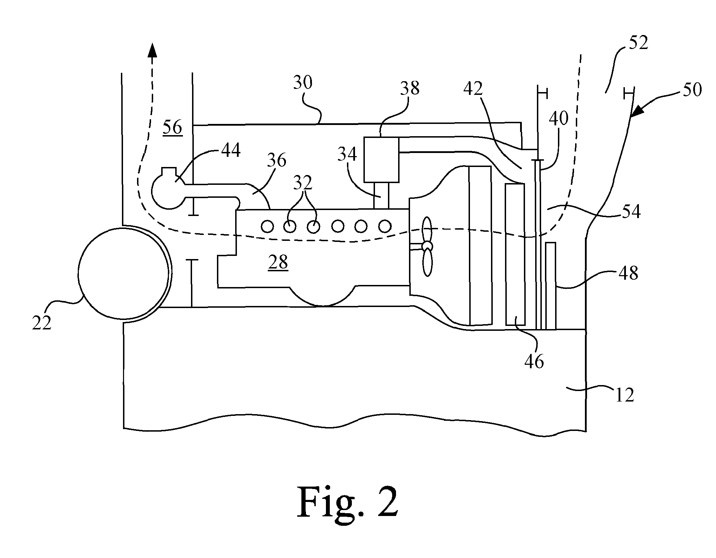

Referring now to the drawings, and more particularly to Figs. 1 and 2, there is shown a work vehicle in the form of an agricultural harvesting machine, such as an agricultural combine 10. The work vehicle can also be in the form of a different type of vehicle used in a dirty or chaff laden operating environment, such as an agricultural tractor, self propelled forage equipment, etc.

Combine 10 includes a supporting structure or body 12 having ground engaging wheels 14 extending from body 12. Although combine 10 is illustrated as having wheels 14, it could also have ground engaging tracks, either full tracks or half tracks. A harvesting platform (not shown), such as a soybean cutting platform or corn head, is used for harvesting a crop and directing it to a feederhouse 16. The harvested crop is directed by feederhouse 16 to internal workings of combine 10 not specifically shown in Fig. 1, such as an axial crop processing unit which threshes and separates the harvested crop material. Grain and chaff fall through grates below the crop processing unit to a cleaning system which removes the chaff and directs the clean grain via a clean grain elevator 18 to grain hopper 20. The clean grain in hopper 20 is typically unloaded into a gravity wagon or truck using unloading auger 22. The threshed and separated crop material other than the grain is transported via a discharge beater to a straw chopper 24, which chops and flails the non-grain material back to the field. The operation of combine 10 is controlled from an operator's cab 26.

Mechanical power for combine 10 is provided by an internal combustion (IC) engine 28 carried by body 12. IC engine 28 is substantially enclosed within an engine compartment, the purpose of which will be described in further detail hereinafter. In one embodiment, the engine compartment is in the form of an engine housing 30 which substantially surrounds and is manufactured with IC engine 28. In other words, during manufacture, IC engine 28 may be mounted to a standalone frame to which housing panels are attached (forming engine housing 30), and the frame in turn mounted to combine 10.

IC engine 28, in known manner, includes a plurality of combustion cylinders 32 (Fig. 2) which are in fluid communication with an intake manifold 34 and an exhaust manifold 36. Intake manifold 34 receives filtered combustion air from an air filter 38, which in turn receives combustion air from a pre-cleaner 40 via a combustion air duct 42. In the embodiment shown, a single intake manifold 34 is shown providing intake air to all of the combustion cylinders 32; however, multiple intake manifolds can be provided, each coupled with a subset of the number of combustion cylinders 32. Moreover, a turbocharger system (not specifically shown) is utilized for providing compressed charge air to combustion cylinders 32. Exhaust gas is discharged from combustion cylinders 32 to muffler 44 via exhaust manifold 36. The exhaust gas from muffler 44 is discharged to the ambient environment.

In the embodiment shown, pre-cleaner 40 is in the form of a rotary screen which rotates during use and is used for removing coarse particulate matter such as chaff, straw, etc. prior to flowing past radiator 46. A vacuum 48 vacuums the particulate matter from the outer surface of rotary screen 40 during each revolution of rotary screen 40.

An air scoop 50 is positioned adjacent the upstream side of rotary screen 40 and vacuum 48. Air scoop 50 has an inlet 52 and an outlet 54. Air scoop inlet 52 is positioned above the housing of IC engine 28, and is positioned near or above the top of combine body 12. Typically, chaff and dust laden air which is used within combine 10 hovers several feet above the ground level. By positioning air scoop inlet 52 above the height of combine body 12 and facing air scoop inlet 52 in an upward direction, the air which is used in IC engine 28 is substantially cleaner. This in turn reduces the amount of foreign matter which must be screened and filtered from the incoming air. It is also possible to use a conventional combine with a louvered panel on the outside of rotary screen 44, rather than an air scoop.

In the embodiment shown, muffler 44 is positioned within air exhaust chimney 56 such that the hot exhaust gases discharged from muffler 44 flow in an upward direction to the ambient environment. IC engine 28 is substantially enclosed within engine housing 30, and air is drawn through air scoop 50 at one end of engine housing 30, and discharged at an opposite end of engine housing 30 through air exhaust chimney 56.

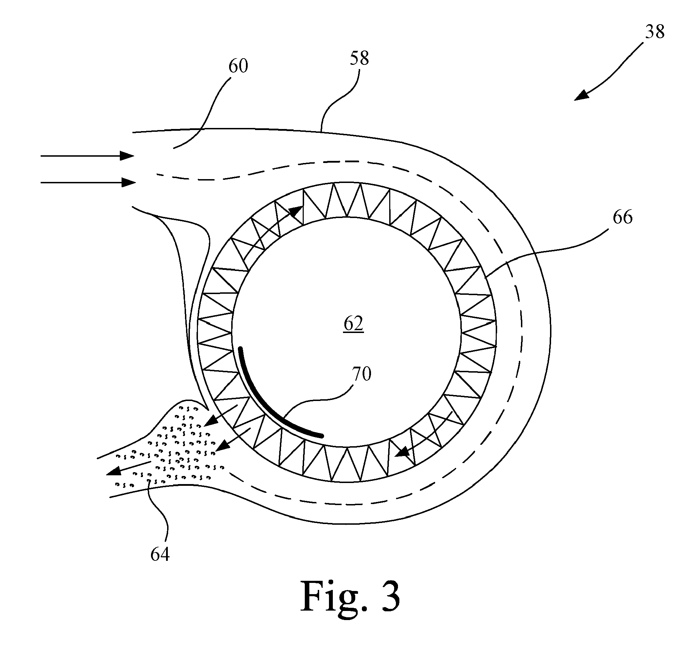

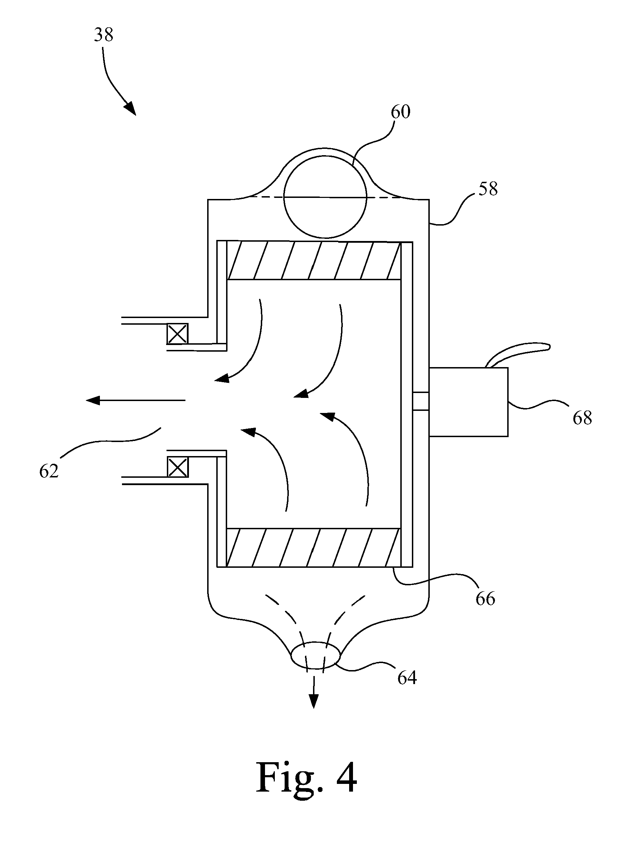

Referring now to Figs. 3 and 4, air filter 38 will be described in greater detail. Fine particulates are filtered by air filter 38, and coarse particulates are filtered by pre-cleaner 40. Air filter 38 includes a housing 58 having an inlet 60, an outlet 62 and an aspiration port 64. Housing 58 rotatably carries a rotating filter element 66, to be described hereinafter.

Inlet 60 receives combustion air to be filtered, preferably charged combustion air from a turbocharger which is also cooled using an air-to-air aftercooler (not shown). Inlet 60 is preferably positioned at or near the top of air filter 38 so that particulate matter can fall to the bottom for removal through aspiration port 64. Aspiration port 64 is under a vacuum pressure and is coupled with a vacuum source (not shown) for drawing particulate laden air from air filter 38. The air is then discharged from aspiration port 64 to the ambient environment.

Filter element 66 is a tubular filter element and is coupled with and rotatably driven by a motor 68. Motor 68 is in the form of an electric motor in the embodiment shown, but can be configured with any suitable configuration, such as a hydraulic or pneumatic motor. The rotational speed at which filter element 66 is driven, and the diameter of filter element 66, can vary depending on the application. For example, filter element 66 can have an outside diameter of approximately 15 to 20 inches, a length of approximately 10 to 20 inches, and a rotational speed of approximately 500 to 1000 RPM. In one embodiment, the rotational speed of filter element 66 can be matched relative to the flow velocity of combustion air flowing through air filter 38 from inlet 60 to aspiration port 64, such as at approximately the same tangential speed as the flow velocity of the combustion air.

A baffle 70 is positioned radially within filter element 66 in an area associated with aspiration port 64. Baffle 70 interrupts the vacuum created by the flow of clean air as it passes through filter element 66 in this area. It does this by sealing against the inside surface of the filter element 66 and preventing the vacuum that generally exists inside the filter from acting on the inside surface of the filter element 66 where baffle 70 is located and thereby holding the dirt inside the filter element by the lower pressure applied to the inside surface of the filter element 66. The size of baffle 70 can be, e.g., approximately 90 degrees of the inside circumference of filter element 66.

During operation, air is drawn through air scoop 50 and is diverted from a vertically downward direction to a horizontal direction entering rotary screen 40. Part of the air flows through radiator 46 and past IC engine 28 for cooling, as indicated by the dashed line in Fig. 2, while part of the air flows through combustion air duct 42 to provide combustion air to air filter 38. The dust-laden combustion air enters housing 58 of air filter 38 tangentially so that the air is already moving in the same direction as the direction of rotation of the rotating filter element 66. This creates a powered circulation of air around the inside of filter housing 58. As this dust-laden air travels through housing 58 from inlet 60 to aspiration port 64, the dust gravitates to the outer wall of the inside of the housing 58. The clean air, however, is sucked through the rotating filter element 66. Any fine dust particles that are not spun out centrifugally are trapped in filter element 66. The clean air that has passed through filter element 66 collects inside rotating filter element 66 where it is then delivered from outlet 62 to intake manifold 34 for combustion. The fine dust that is trapped in the pleats of filter element 66 is carried around with filter element 66 as it rotates. As filter element 66 rotates, the dust trapped in the pleats by the higher pressure on the outside of the filter and the lower pressure on the inside of the filter acting to "blow" the dust particles into the filter element is released adjacent to baffle 70 and is able to merge with the stream of dust particles already circulating near the outer wall of the inside of housing 58. At this point, the dust encounters aspiration port 64 on the outer wall, which is connected to a vacuum source, such as an exhaust venturi or a fan shroud. The dust passes through aspiration port 64 and is transported out the exhaust pipe or fan shroud. In this way, the dust is purged from the air cleaner.

It is also possible to configure air filter 38 with an enhanced spin cleaning mode of operation, whereby the rotational speed of filter element 66 is significantly increased when IC engine 28 is idled or shut down to centrifugally eliminate any collected dust from filter element 66. When IC engine 28 is running at high speed and load, it is possible that the air flow rate is high enough that trapped dust might not release easily. When IC engine 28 slows to idle or is turned off, then the dust could be centrifugally cast from filter element 66 using the enhanced spin cleaning mode of operation. The enhanced spin cleaning mode of operation could be initiated automatically with control logic whenever the engine is shut down or idled, or could be initiated manually. This mode of operation can be provided, for example, by a digital microprocessor or microcontroller circuit (not shown) including a motor drive circuit coupled to motor 68 to drive it at a plurality of selectable speeds and a speed sensor coupled to the engine to detect a motor speed, or circuit configured to receive a motor speed from the engine over a vehicle communications bus such as a controller area network (CAN) bus (see, e.g., the SAE J 1939 standard which defines a typical vehicular controller area network communications system). In this system, the digital microprocessor circuit would sense the speed of the engine, calculate the corresponding speed of the filter, and transmit signals to the motor drive circuit to command motor 68 to rotate at that speed. Alternatively, the enhanced spin cleaning mode of operation can be provided by a conventional pneumatic, hydraulic, or mechanical circuit configured to provide the same speed control functions.

Using the air filter of the present invention as described above, it is possible that an operator would not need to service the air filter assembly, and the filter element would not need to be periodically replaced. Downtime would be avoided, and since filters would not become clogged, there would not be any loss of power due to excessive filter restriction. This would result in improved fuel economy and increased productivity.

## Claims

1. An air filter (38) for an internal combustion engine (28), comprising:
a generally tubular filter element (66);
an inlet (60) positioned outside said tubular filter element (66);
an aspiration port (64) positioned outside said tubular filter element (66), said aspiration port (64) leading to an ambient environment; and
an outlet (62) in communication with an inside of said tubular filter element (66),
**characterized in that** the inlet (60) is near a top of said air filter (38), that the filter element (66) is rotating, and that the aspiration port (64) is positioned near a bottom of said air filter (38).

2. The air filter (38) of claim 1, wherein combustion air moves tangentially around said filter element (66) from said inlet (60) to said aspiration port (64), and said combustion air also moves radially inward though said filter element (66) from said inlet (60) to said outlet (62).

3. The air filter of claim 1 or 2, including a motor (68) rotatably driving said filter element (66) at a speed associated with a flow velocity of combustion air flowing generally tangentially around said filter element (66) from said inlet to said aspiration port (64).

4. The air filter of one of claims 1 to 3, including a baffle (70) positioned within said filter element (66) in an area associated with said aspiration port (64).

5. The air filter of claim 3 or 4, wherein said motor (68) comprises an electric motor.

6. The air filter of one of the preceding claims, wherein the filter element (66) is arranged in pleats.

7. A work vehicle (10), comprising:
a vehicle body (12),
an internal combustion engine (28) carried by said vehicle body (12), said internal combustion engine (28) including a plurality of combustion cylinders (32); and
an air filter (38) according to one of claims 1 to 6 in communication with a set of said combustion cylinders (32).

8. The work vehicle (10) of claim 7, wherein said aspiration port (64) is at a vacuum pressure.

9. The work vehicle (10) of claim 7 or 8, further including a pre-cleaner (40) positioned upstream from said air filter (38).

10. The work vehicle (10) of one of claims 7 to 9, wherein said work vehicle (10) is an agricultural combine.
